Europäisches Patentamt

(19) European Patent Office

Office européen des brevets

(11) Publication number: **0 067 126**
**B1**

(12) **EUROPEAN PATENT SPECIFICATION**

(45) Date of publication of patent specification: **07.08.85**

(21) Application number: **82830084.8**

(22) Date of filing: **06.04.82**

(51) Int. Cl.⁴: **B 08 B 15/00, B 23 K 7/02**

(54) **Means for collecting fumes during cutting operations.**

(30) Priority: **19.05.81 IT 8338381**

(43) Date of publication of application:
**15.12.82 Bulletin 82/50**

(45) Publication of the grant of the patent:
**07.08.85 Bulletin 85/32**

(84) Designated Contracting States:
**AT BE CH DE FR GB LI LU NL SE**

(56) References cited:
**FR-A-2 462 218**
**US-A-3 769 097**
**US-A-4 058 299**

(73) Proprietor: **DANECO-DANIELI ECOLOGIA Spa**
**Via Nazionale, 85 S.S. 56**
**I-33048 San Giovanni al Natisone (UD) (IT)**

(72) Inventor: **Castelli, Luigi**
**Via Palestrina, 1**
**I-34100 Trieste (IT)**

(74) Representative: **Petraz, Gilberto Luigi**
**G.L.P. S.a.s. di Gilberto Petraz P.le Cavedalis 6/2**
**I-33100 Udine (IT)**

Courier Press, Leamington Spa, England.

EP 0 067 126 B1

## Description

This invention concerns means for collecting fumes during cutting operations.

To be more exact, the invention concerns means for collecting fumes generated during the operations of cutting semi-finished products made of steel and other metals, such as sheets, sections, blooms, billets, slabs, etc.

According to the invention the cutting operations refer to operations carried out with oxygen torches fitted to oxygen cutting benches, continuous casting machines and other plant.

It is known that during operations to cut semi-finished steel products with oxygen torches a considerable quantity of fumes or gases is generated which has to be collected and scrubbed to prevent air pollution.

The collection of these fumes entails certain difficulties in that the cutting torches are moved in relation to the material to be cut and therefore the source of fumes or gases is displaced continuously along the cutting line.

Furthermore, the material to be cut may itself be moving, as happens in continuous casting machines, for instance.

A system is known which consists of a stationary hood fitted above and below or at the side of the cutting zone so as to cover as well as possible all the points which the cutting torches may reach during their movements.

This method of collection requires a heavy flow of air since it comprises a very big aspiration surface.

Therefore, the traditional system involves the collection of air over a great surface, thereby entailing high installation and operating costs, whereas a much smaller surface would be quite enough.

Indeed, so as to ensure collection of the fumes generated it is necessary to have a speed of aspiration higher than a given value in the aspiration zone.

The value of the aspiration surface depends mainly on the distance between the hood and the torch, and the flow of air to be aspirated is proportional to the aspiration surface of the hood.

FR—A—2.462.218 describes a hood located below the cutting line and moved by a bridge crane together with all the means for aspirating and filtering the aspirated fumes.

This system has a considerable overall vertical size and requires movable structures, such as the bridge crane, having great strength, since the weight of the movable parts is of necessity heavy.

US—A—4,058,299 teaches a solution in which one upper aspirating hood is envisaged as corresponding with each torch performing the cutting, one single movable hood being provided below as well.

This movable hood comprises means for communication with a stationary duct, and the seal between this duct and the communication means is obtained with elastic strips placed lengthwise in relation to the duct.

According to this solution the movement of the movable hood is obtained with sensors monitoring the position of the tools performing the cutting.

A consequent drawback lies in the need for providing separate movement means for the movable hood, such as motors and runways for sliding, and for providing means to link the movement means to the motion of the tools and relative supporting means.

A further drawback of the solution is that it envisages a plurality of individual upper hoods for the tools. Indeed, these hoods are located very close to the tools and therefore require a cooling system and have a complex structure.

US—A—3,769,097 teaches a system consisting of a hood divided into various sectors each of which is provided with an aspiration pipe and a relative cut-off valve.

This enables the aspirated flow to be reduced in comparison to that used with one single hood or chamber, since only those valves are opened which belong to the sectors or chambers aspirating from the zones within which the cutting torches are passing.

However, this solution requires a costly system for opening and closing the valves automatically to suit the position of the torches; in fact it is not satisfactory to have an operator performing these operations by hand.

Our invention is suitable for all the foregoing operations and for like operations and consists of a hood positioned advantageously below the element to be cut, the hood being divided into various chambers.

The hood can also be positioned above the element to be cut, although the results will be no better.

However, according to our invention one single auxiliary hood can be envisaged which is placed above and in cooperation with oxygen cutting torches. This auxiliary hood can be linked, according to the invention, to the aspiration means themselves cooperating with the lower hood.

As an alternative, separate aspiration means can be envisaged for the auxiliary hood.

However, in either case the flow of air aspirated by the lower and upper hoods will be coordinated advantageously to suit the specific type of cutting and/or degree of progress of the cutting operations so as to ensure at all times the maximum efficiency of the aspiration of fumes.

The arm bearing the torches also serves to bear a pipe which cooperates with side openings comprised in the hoods, whereas this pipe cooperates at its other end with one single aspiration duct.

In this way the frame itself which bears the torches is enabled to support, guide and position the pipe, which from time to time connects the various chambers in the hood to the one single aspiration duct in an independent and automatic manner.

The invention is therefore embodied with means for collecting fumes during cutting operations, whereby the cutting operations are performed with oxygen torches on sheets, sections, blooms, billets, slabs, etc. and the material to be cut can be movable or still, and whereby an aspiration hood is located advantageously below the element to be cut and is divided into a number of crosswise chambers with side openings, characterised in that also a movable aspiration pipe cooperates with a stationary aspiration duct by means of an end portion and elastic strips, whereby the movable aspiration pipe is supported by a beam carrying torches and has in cooperation with the side openings a movable end hood with side sealing plates.

Let us now see a preferred embodiment of the invention with the help of the attached figures, which are given as non-restrictive examples and in which:—

Fig. 1 shows a diagram of a cross section of the invention;

Fig. 2 gives a diagram of a view of the invention from above;

Fig. 3 shows a system for connecting the pipe to the stationary duct.

In the figures the description of the application of the invention gives as an example an oxygen cutting bench 10 provided with several torches 11 in line for the cutting of sheets 12.

Seeing that the greater part of the fumes is generated below the sheet 12 being cut, the fumes are collected with a movable hood 13 secured to a beam 14 which bears the torches 11.

A containing hood 15 with chambers 115 is envisaged in the lower part of the bench.

The movable hood 13 follows the torches 11 as the latter move, and aspirates the fumes precisely in a chamber 115 where they are generated; in this way the aspiration flow needed to collect the fumes can be lessened.

The containing hood 15 under the oxygen cutting bench 10, which upholds the sheet 12 in the cutting phase, is equipped with lengthwise walls 16 and crosswise partitions 17 to hold the fumes generated and to create the desired chambers 115.

A lengthwise wall 116 which is positioned on the side where the movable hood 13 operates, is provided with an appropriate opening 113 disposed lengthwise so as to enable the fumes to be withdrawn.

The side screening is completed with a wall 18 which is solidly fixed to the movable aspiration hood 13 and which is able to close the containing hood 15 lengthwise at a tract 115 in which the fumes are being generated.

The crosswise partitions 17 prevent the fumes escaping along the hood 15 and enable the fumes themselves to be collected with a smaller aspiration flow.

The fumes generated by the cutting torches 11 are thus readily collected with a very small aspiration flow.

Indeed, the movable hood 13 aspirates from a chamber 115 which is closed at its sides by the walls 16 and partitions 17 and is closed above partially or fully by the sheet 12 being cut.

Whenever it is also wished to collect fumes generated above the sheet 12 during the starting phase of the cutting, namely while the sheet 12 has still not been pierced by the jet of the torches 11, the system can be completed with a hood 23 located above the plane of the sheet and also solidly fixed to the structure 14 bearing the torches 11.

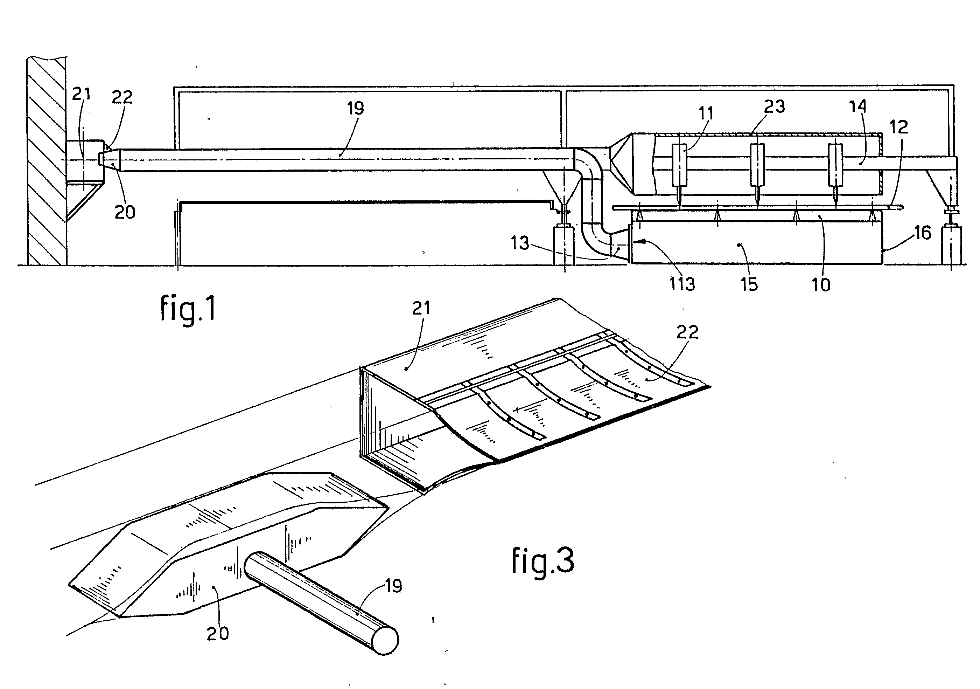

In the example of Fig. 1 this auxiliary hood 23 is shown with a partially cutaway view so as to let the torches 11 and the relative supporting structure 14 be seen. In this example the hood 23 incorporates also a part of the structure 14.

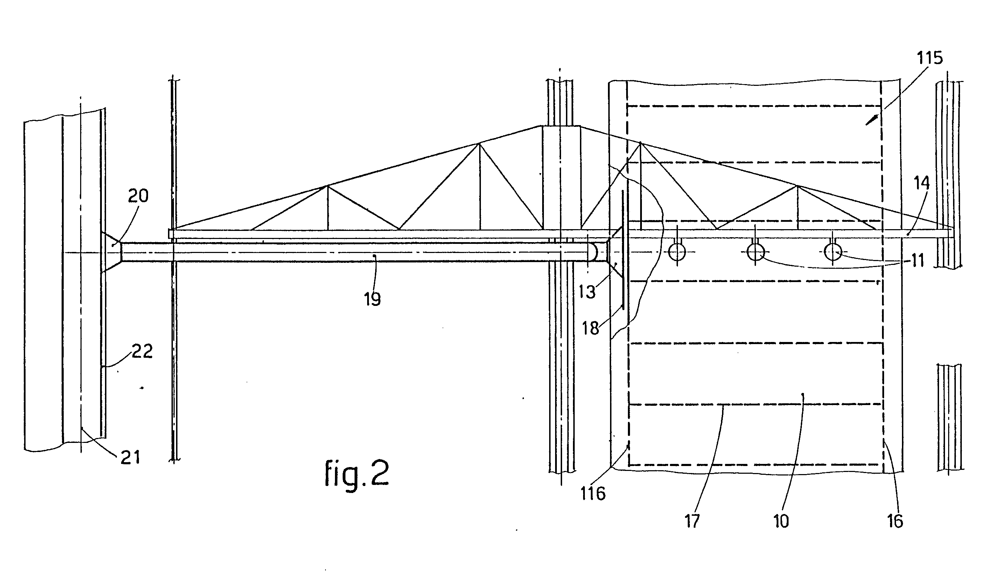

The hood 23 has not been shown in Fig. 2 so as to keep the drawing clear.

The movable hood 13 and, in this instance, the upper hood 23 too are connected to a pipe 19 solidly fixed to the beam 14 bearing the torches 11.

Connection of the end means 20 of the pipe 19 to the stationary duct 21 which takes the fumes to the scrubbing plant can be obtained by embodying a sealing system with two means 22 having elastic strips of rubber or another material.

These means 22 with elastic strips are put on the stationary duct 21 in such a way that the end means 20 of the movable pipe 19 can be engaged directly with the stationary duct 21.

The end means 20 of the movable pipe 19 can be shaped suitably so as to spread apart the elastic strips 22 without any effort during its traversing movement and without impairing a good seal.

The connection of the stationary duct 21 to the movable pipe 19 can also be embodied with a hose or an articulated pipe or other like systems.

As compared to conventional systems, the system of this invention enables the following advantages to be obtained:

— elimination of the shut-off valve systems employed so as to be able to aspirate only from the zones in which the torches 11 are located during the cutting phase, and also elimination of related systems for automatic operation of the valves to suit the position of the torches;

— reduction in the flow needed to collect the fumes;

— smaller sizes of the components of the plant for collecting and scrubbing fumes (hood, pipes, ducts, filter, fan, stack) and therefore lower installation costs;

— lower operating costs of the plant for collecting and scrubbing fumes owing to less power being absorbed by the fans aspirating the fumes.

We have described here a preferred embodiment, but variants are possible.

Thus the sizes and proportions can be varied and it is possible to add, remove or integrate parts; it can be envisaged that the opening 113 is not continuous but is separated into sectors; it is possible to visualise means which cover the hood 15 when smaller pieces are being worked; these covering means can be movable together with the beam 14 and/or be positioned as required.

The pipe 19 can be varied as required.

## Claims

1. Means for collecting fumes during cutting operations, whereby the cutting operations are performed with oxygen torches (11) on sheets, sections, blooms, billets, slabs, etc. (12) and the material to be cut can be movable or still, and whereby an aspiration hood (15) is located advantageously below the element (12) to be cut and is divided into a number of crosswise chambers (115) with side openings (113), characterised in that also a movable aspiration pipe (19) cooperates with a stationary aspiration duct (21) by means of an end portion (20) and elastic strips (22), whereby the movable aspiration pipe (19) is supported by a beam (14) carrying torches (11) and has in cooperation with the side openings (113) a movable end hood (13) with side sealing plates (18).

2. Means for collecting fumes during cutting operations as claimed in Claim 1, which comprise one single aspiration hood positioned in cooperation with the torches (11) and above the element (12) to be cut.

## Patentansprüche

1. Mittel zur Aufnahme des Rauches während der Schneideverfahren, wobei die genannten Schneideverfahren auf Blechen, Profilmaterialien, Vorblocken, Knüppeln, Brammen u.s.w. (12) mittels Sauerstoffschneidevorrichtungen (11) durchgeführt werden, wobei das zu schneidende Material fest oder beweglich sein kann, und wobei eine Haube (15) vorteilhaft unter dem zu schneidenden Stück (12) angeordnet ist und in eine Mehrzahl Querkammern (15) mit seitlicher Öffnung (113) aufgeteilt ist, dadurch gekennzeichnet, daß auch ein bewegliches Saugrohr (19) durch einen Endteil (20) und elastische Streifen (22) mit einer stationären Saugleitung (21) mitwirkt, wobei das bewegliche Saugrohr (19) von einem Träger (14) abgestützt ist, der die Schneidevorrichtungen (11) trägt und in Zusammenarbeit mit den seitlichen Öffnungen (113) eine bewegliche Endhaube (13) mit seitlichen Schenkeldichtungen (18) aufweist.

2. Mittel zur Aufnahme des Rauches während der Schneideverfahren nach Anspruch 1, die eine einzige Haube enthalten, die in Zusammenarbeit mit den Schneidevorrichtungen (11) und über dem zu schneidende Stück (12) angeordnet ist.

## Revendications

1. Moyens de captation des fumées dans les opérations de taille, les dites opérations de taille étant effectuées avec des chalumeaux oxygaz (11) sur tôles, profilés, blooms, billettes, brammes, etc. (12), la matière à trancher pouvant être immobile ou en mouvement, et une hotte d'aspiration (15) étant installée de manière avantageuse sous l'élément à trancher, et subdivisée en plusieurs chambres transversales (15) avec ouverture latérale (113), caractérisées par le fait qu'également un tube mobile d'aspiration (19) coordonné à un conduit stationnaire d'aspiration (21) grâce à une partie terminale (20) et des bandes élastiques (22), le tube mobile d'aspiration (19) étant supporté par une poutre (14) portant les chalumeaux (11) et présentant en coordination avec les ouvertures latérales (113) une hotte terminale mobile (13) avec ailes latérales de tenue (18).

2. Moyens de captation des fumées dans les opérations de taille, comme la revendication 1, comprenant une hotte d'aspiration unique installée en coordination avec les chalumeaux (11) et au-dessus de l'élément (12) à trancher.

fig.1

fig.3

fig.2